# EUROPEAN PATENT APPLICATION

(11) **EP 4 750 140 A1**
(43) Date of publication of application: **27.05.2026**
(21) Application number: 24856771.1
(22) Date of filing: 19.08.2024
(51) Int. Cl.: H04W 28/02, H04L 41/0894, H04W 76/22, H04W 28/24, H04W 88/14

(54) **METHOD AND APPARATUS FOR SUPPORTING COMMUNICATION SERVICE THROUGH ADAPTIVE SERVICE QUALITY IN WIRELESS COMMUNICATION SYSTEM**

(30) Priority: 18.08.2023 KR 20230108601
(71) Applicant: Samsung Electronics Co., Ltd., Suwon-si, Gyeonggi-do 16677 (KR)
(72) Inventor: BAEK, Youngkyo, Suwon-si Gyeonggi-do 16677 (KR)
(74) Representative: Nederlandsch Octrooibureau
(86) International application number: PCT/KR2024/012271
(87) International publication number: WO 2025/042159

(57) **Abstract**

The present disclosure relates to a 5G or 6G communication system for supporting a higher data transmission rate. An operation method of a session management function (SMF) in a wireless communication system according to an embodiment of the present disclosure may comprise the operations of: receiving, from a policy control function (PCF), a first message indicating an updated session management (SM) policy for a packet data unit (PDU) session; and transmitting, to a base station, a second message including an alternative QoS profile determined on the basis of the first message. The first message may include at least one of an alternative quality of service (QoS) parameter set and an alternative PDU set QoS parameter set.

## Description

### [Technical Field]

Various embodiments of the disclosure relate to a method and device for adaptively modifying a QoS value to service traffic and notifying the modification so that an application server may modify the QoS value, when a base station fails to sufficiently satisfy a QoS requirement level or fails to satisfy an energy consumption requirement level for QoS flows in a wireless communication system.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with extended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

### [Detailed Description of the Invention]

### [Technical Problem]

The disclosure relates to a method for more smoothly providing a data communication service by changing a QoS value to provide a suboptimal service when a base station fails to sufficiently satisfy a QoS requirement level or fails to satisfy an energy consumption requirement level for QoS flows in a wireless communication system, and by delivering a current circumstance to an application to adjust an encoding method or a data transmission rate according to the circumstance of a communication network.

Further, the disclosure proposes a method for modifying and providing QoS to adjust a trade-off between QoS provision and energy consumption between a base station and an application server in consideration of the amount of energy consumed by the base station in providing a service, or to interactively provide a data service between a UE and an application server, such as extended reality (XR) media service.

### [Technical Solution]

According to an embodiment of the disclosure, a method of operating a session management function (SMF) in a wireless communication system may include receiving, from a policy control function (PCF), a first message indicating an updated session management (SM) policy for a packet data unit (PDU) session; and transmitting, to a base station, a second message including an alternative QoS profile determined based on the first message. The first message may include at least one of an alternative quality of service (QoS) parameter set or an alternative PDU set QoS parameter set.

According to an embodiment of the disclosure, a method of operating a base station in a wireless communication system may include receiving, from a session management function (SMF), a first message including an alternative QoS profile related to an alternative packet data unit (PDU) set quality of service (QoS) parameter set; and changing a configured QoS profile to the alternative QoS profile, when the configured QoS profile needs to be changed.

According to an embodiment of the disclosure, a session management function (SMF) in a wireless communication system includes a transceiver; and a controller. The controller may receive, from a policy control function (PCF), a first message indicating an updated session management (SM) policy for a packet data unit (PDU) session, and control to transmit, to a base station, a second message including an alternative QoS profile determined based on the first message. The first message may include at least one of an alternative quality of service (QoS) parameter set or an alternative PDU set QoS parameter set.

According to an embodiment of the disclosure, a base station in a wireless communication system includes a transceiver; and a controller. The controller may receive, from a session management function (SMF), a first message including an alternative QoS profile related to an alternative packet data unit (PDU) set quality of service (QoS) parameter set, and change a configured QoS profile to the alternative QoS profile, when the configured QoS profile needs to be changed.

### [Advantageous Effects]

The method and device according to various embodiments of the disclosure may allow a UE receiving a service to smoothly continue a data service such as XR and may increase energy efficiency by reducing energy consumption of a base station, by enabling a QoS flow to be serviced by changing to a QoS serviceable according to a circumstance of the base station in a wireless communication system and notifying an application server of the change so that the service may be provided according to the changed QoS.

### [Brief Description of Drawings]

FIG. 1 is a view illustrating a structure of a wireless communication system according to an embodiment of the disclosure.
FIGS. 2A and 2B are views illustrating a method in which an application server provides alternative QoS profiles and a base station adaptively operates according to an embodiment of the disclosure.
FIGS. 3A and 3B are views illustrating a method in which a handover procedure is performed based on alternative QoS profiles according to an embodiment of the disclosure.
FIG. 4 is a view illustrating a method for reducing energy consumption based on alternative QoS profiles according to an energy usage requirement of a base station according to an embodiment of the disclosure.
FIGS. 5A and 5B are views illustrating a method for reducing energy consumption by switching based on alternative QoS profiles according to an energy usage requirement of a base station according to an embodiment of the disclosure.
FIG. 6 is a view illustrating a method for reducing energy consumption by switching based on alternative QoS profiles according to an energy usage requirement of a base station according to an embodiment of the disclosure.
FIG. 7 is a block diagram illustrating a UE according to an embodiment of the disclosure.
FIG. 8 is a block diagram illustrating a network entity according to an embodiment of the disclosure.

### [Mode for Carrying out the Invention]

Hereinafter, the operational principle of the disclosure is described below with reference to the accompanying drawings. When determined to make the subject matter of the present disclosure unclear, the detailed of the known functions or configurations may be skipped. The terms as used herein are defined considering the functions in the present disclosure and may be replaced with other terms according to the intention or practice of the user or operator. Therefore, the terms should be defined based on the overall disclosure.

For the same reasons, some elements may be exaggerated or schematically shown. The size of each element does not necessarily reflect the real size of the element. The same reference numeral is used to refer to the same element throughout the drawings.

Advantages and features of the present disclosure, and methods for achieving the same may be understood through the embodiments to be described below taken in conjunction with the accompanying drawings. However, the scope of the disclosure is not limited to embodiments described herein, but rather, other various changes may be made thereto. Various embodiments are provided for thorough disclosure of the present invention and making the category of the present invention known to one of ordinary skill in the art, and the present invention is defined only by the claims. The same reference numeral denotes the same element throughout the specification.

It should be appreciated that the blocks in each flowchart and combinations of the flowcharts may be performed by computer program instructions. Since the computer program instructions may be equipped in a processor of a general-use computer, a special-use computer or other programmable data processing devices, the instructions executed through a processor of a computer or other programmable data processing devices generate means for performing the functions described in connection with a block(s) of each flowchart. Since the computer program instructions may be stored in a computer-available or computer-readable memory that may be oriented to a computer or other programmable data processing devices to implement a function in a specified manner, the instructions stored in the computer-available or computer-readable memory may produce a product including an instruction means for performing the functions described in connection with a block(s) in each flowchart. Since the computer program instructions may be equipped in a computer or other programmable data processing devices, instructions that generate a process executed by a computer as a series of operational steps are performed over the computer or other programmable data processing devices and operate the computer or other programmable data processing devices may provide steps for executing the functions described in connection with a block(s) in each flowchart.

Further, each block may represent a module, segment, or part of a code including one or more executable instructions for executing a specified logical function(s). Further, it should also be noted that in some replacement embodiments, the functions mentioned in the blocks may occur in different orders. For example, two blocks that are consecutively shown may be performed substantially simultaneously or in a reverse order depending on corresponding functions.

As used herein, the term "...unit" means a software element or a hardware element. The '...unit' plays a certain role. However, 'unit' is not limited to software or hardware. A 'unit' may be configured in a storage medium that may be addressed or may be configured to execute one or more processors. Accordingly, as an example, a 'unit' includes elements, such as software elements, object-oriented software elements, class elements, and task elements, processes, functions, attributes, procedures, subroutines, segments of program codes, drivers, firmware, microcodes, circuits, data, databases, data architectures, tables, arrays, and variables. Functions provided within the components and the 'units' may be combined into smaller numbers of components and 'units' or further separated into additional components and 'units'. Further, the components and 'units' may be implemented to execute one or more CPUs in a device or secure multimedia card. Further, in various embodiments of the disclosure, a "...unit" may include one or more processors.

In various embodiments of the disclosure, user equipment may be referred to as a UE, a terminal, a mobile station (MS), a cellular phone, a smartphone, a computer, or various devices capable of performing a communication function.

Various embodiments of the disclosure may also apply to other communication systems with similar technical background or channel form. Further, various embodiments of the disclosure may be modified in such a range as not to significantly depart from the scope of the disclosure under the determination by one of ordinary skill in the art and such modifications may be applicable to other communication systems.

In a specific description of various embodiments of the disclosure, a communication system may use wireless communication systems, e.g., the new RAN (NR), which is the radio access network, and the packet core (5G system, or 5G core network, or next generation core (NG core)), which is the core network, according to the 5G communication standard of the 3GPP which is a radio communication standardization organization. Embodiments of the present invention may also be applicable to communication systems with a similar technical background with minor changes without significantly departing from the scope of the present invention, and this may be possible under the determination of those skilled in the art to which the present invention pertains.

As used herein, terms for identifying access nodes, terms denoting network entities (NEs), terms denoting messages, terms denoting interfaces between network functions (NFs), and terms denoting various pieces of identification information are provided as an example for ease of description. Thus, various embodiments of the disclosure are not limited to the terms, and the terms may be replaced with other terms denoting objects with equivalent technical meanings.

The 5G system may support the network slice, and traffic for different network slices may be processed by different protocol data unit (PDU) sessions. The PDU session may mean an association between a data network providing a PDU connection service and a UE. The network slice may be understood as technology for logically configuring a network with a set of network functions (NFs) (or network entities) to support various services with different characteristics, such as broadband communication services, massive IoT, V2X, or other mission critical services, and separating different network slices. Therefore, even when a communication failure occurs in one network slice, communication in other network slices is not affected, so that it may be possible to provide a stable communication service. In various embodiments of the disclosure, the term "slice" may be interchangeably used interchangeably with "network slice". In such a network environment, the UE may access a plurality of network slices when receiving various services. Further, the network function (NF) may be a software instance running on hardware and be implemented as a virtualized function instantiated on a network element or an appropriate platform. Of course, the example is not limited thereto, and an NF may be configured as independent hardware or may be configured as a combination of software and hardware.

The mobile communication carrier may constitute the network slice and may allocate network resources suitable for a specific service for each network slice or for each set of network slices. Network resource may refer to an NF or a logical resource provided by the NF or a radio resource allocated by the base station.

For example, a mobile communication carrier may configure network slice A for providing a mobile broadband service, network slice B for providing a vehicle communication service, and network slice C for providing an extended reality (XR) service as described below. In other words, the 5G network may efficiently provide a corresponding service to a UE through a specialized network slice suited for the characteristics of each service. In the 5G system, the network slice may be represented as single-network slice selection assistance information (S-NSSAI). The S-NSSAI may include a slice/service type (SST) value and a slice differentiator (SD) value. The SST may indicate the characteristics of the service supported by the network slice (e.g., enhanced mobile broadband (eMBB), IoT, ultra reliability low latency communication (URLLC), V2X, XR service etc.). The SD may be a value used as an additional identifier for a specific service referred to as SST.

Various embodiments of the disclosure are described below with reference to the drawings.

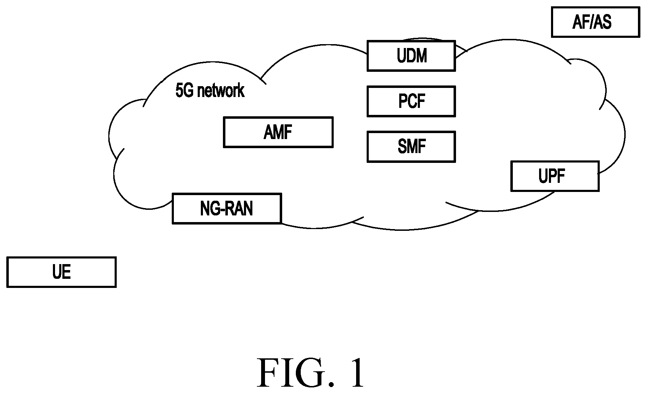

FIG. 1 is a view illustrating a structure of a wireless communication system according to an embodiment of the disclosure.

The network technology used in various embodiments of the disclosure may refer to the standards (e.g., TS 23.501, TS 23.502, TS 23.503, etc.) defined by the international telecommunication union (ITU) or 3GPP, and each of the components included in the network architecture of FIG. 1 may mean a physical entity or may mean software that performs an individual function or hardware combined with software. Hereinafter, the components included in the network structure of FIG. 1 are referred to as NFs.

Interfaces known in the 5G core network (5GC) may be used between NFs, which may be known by referring to the standard TS 23.501 and are omitted from the detailed description.

In FIG. 1, the 5GC may include network entities such as an access and mobility management function (AMF), a session management function (SMF), an authentication server function (AUSF), a user plane function (UPF), a policy control function (PCF), and a unified data management (UDM). Of course, the example is not limited thereto, and the 5GC may include more or fewer entities than illustrated in FIG. 1.

The AMF is an entity for managing access and mobility of a UE. The AMF may serve as a UE-core network endpoint that connects a UE to other entity(s) of the 5GC through a gNB. For example, the AMF may perform network functions such as registration, connection, reachability, mobility management, access identification, authentication, and mobility event generation of a UE.

The SMF may perform a management function for a protocol data unit (PDU) session of a UE. For example, the SMF may perform network functions such as session establishment, modification, release, and session management through maintaining a tunnel between a UPF and an NG-RAN necessary therefor, internet protocol (IP) address allocation and management of a UE, user plane selection and control, traffic processing control in the UPF, and charging data collection control.

The UPF may perform a function of processing user data of a UE. For example, the UPF may perform network functions such as serving as an anchor between radio access technologies (RATs), providing a connection between a PDU session and an AF/AS, packet routing and forwarding, packet inspection, user plane policy application, traffic usage report creation, and buffering.

The UDM may perform functions such as generation of authentication information for 3GPP security, processing of a user identifier (ID), list management for an NF supporting a UE, and subscription information management. The unified data repository (UDR) may perform the functions of storing and providing subscription information managed by the UDM, structured data for exposure, and application data related to network exposure function (NEF) or service.

The PCF may manage operator policy information for providing a service in a 5G system. The UDR stores subscription information of a UE and may provide the stored subscription information to the UDM. Further, the UDR stores operator policy information and may provide the stored operator policy information to the PCF.

The NEF may perform a function of delivering or receiving an event occurring in a 5G system and a supported capability to the outside. For example, the NEF may perform functions such as a function of safely supplying information of an AF/AS to the 5GC, conversion of internal/external information, and redistribution after storing information delivered from other NFs in the UDR.

A UE may access an NG-RAN and register with a 5G system. For example, a UE may access an NG-RAN and perform a registration procedure with an AMF. During the registration procedure, the AMF may determine a network slice available to a UE accessing the NG-RAN and allocate the network slice to the UE. The UE may select a network slice and establish a PDU session for communication with an AF/AS. One PDU session may include one or more quality-of-service (QoS) flows, and each QoS flow may set different parameters to provide a different transmission performance required for each application service.

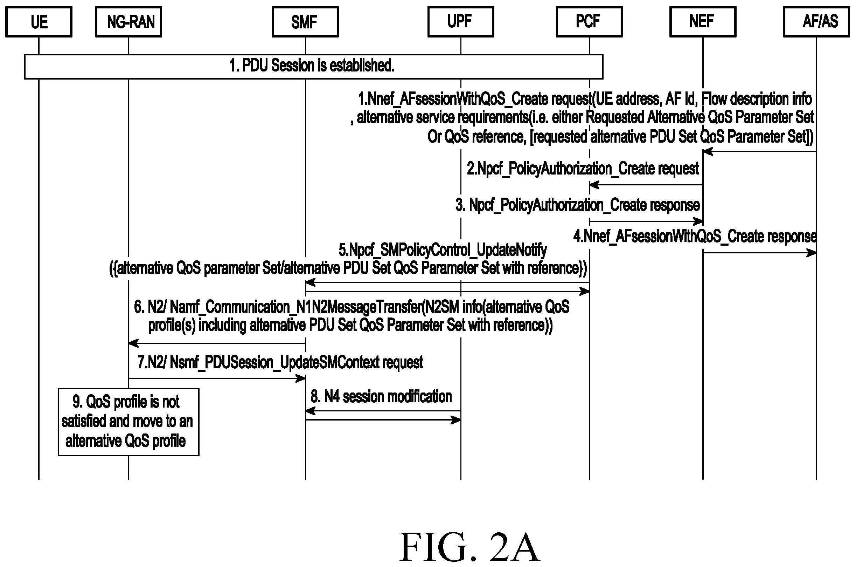

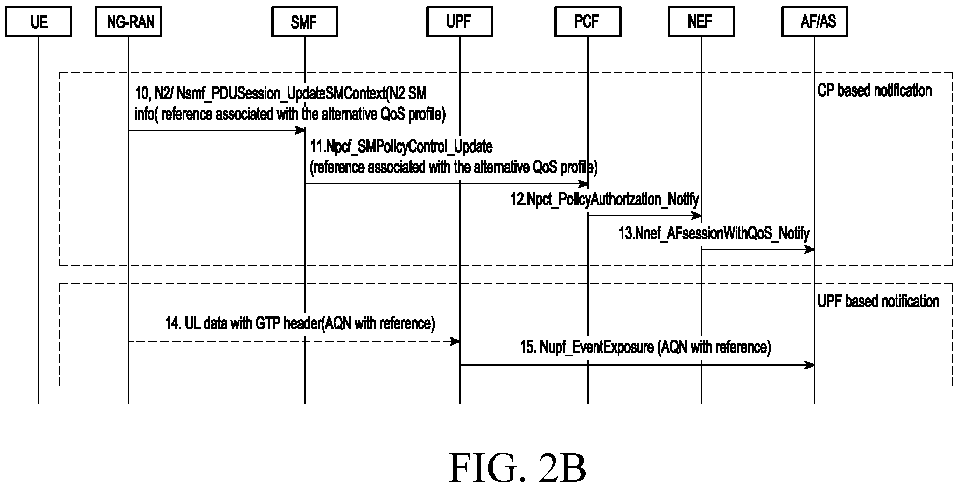

FIGS. 2A and 2B are views illustrating a method in which an application server provides alternative QoS profiles and a base station adaptively operates according to an embodiment of the disclosure.

Referring to FIGS. 2A and 2B, in a circumstance in which a PDU session in step 0 is created (or established) for a UE, service requirements and alternative service requirements for the corresponding service flow of the UE may be delivered from an AF to a PCF through an NEF using an Nnef_AFsessionWithQoS_Create request message, as in step 1 and/or step 2, from an application server (AS) and/or an AF. The request message may include at least one of a UE address for identifying a UE, an AF identifier for identifying an AF, and a flow description or an external application identifier for identifying a service flow.

The service requirement may include a requested QoS reference or requested QoS parameters. According to an embodiment, when providing QoS based on a PDU set, PDU set QoS parameters may be included in the service requirement. The PDU set QoS parameters may include some or all of a PDU set delay budget (PSDB), a PDU set error rate (PSER), or PDU set integrate handling information (PSIHI).

The QoS parameters may include some or all of a priority, a maximum burst size, a packet delay budget (PDB), a maximum bit rate, a guaranteed bit rate, or a packet error rate (PER).

Meanwhile, the AF may deliver alternative service requirements as service requirements that may be substituted when the service requirement is not satisfied in a 5G network, e.g., an NG-RAN, through step 1.

The alternative service requirement is configured as one of a requested alternative QoS reference or a requested alternative QoS parameter set, but when providing QoS for a PDU set, the alternative service requirement may be configured by including alternative PDU set QoS parameter sets together with one of the two. The AF may deliver a plurality of alternative service requirements in order of preference or priority in step 1.

The alternative QoS parameter sets may be configured with the QoS parameters, and the alternative PDU set QoS parameter sets may be configured with the PDU set QoS parameters.

The PCF may authenticate the requirements received through step 1 and/or step 2 and transmit a response to the request through step 3 and/or step 4.

In step 5, the PCF may transmit an updated SM policy for the corresponding PDU session of the corresponding UE to the corresponding SMF. For example, the PCF transmits an Npcf_SMPolicyControl_UpdateNotify message to the SMF, and the message may include lists including at least one of an alternative QoS parameter set or an alternative PDU set QoS parameter set. According to an embodiment, by including a reference for each configuration of the alternative QoS parameter set or the alternative PDU set QoS parameter set in the list, it is possible to know which alternative QoS parameter set or alternative PDU set QoS parameter set corresponds by referring to the reference.

Although the description mainly describes the alternative QoS parameter set for convenience of description, the alternative QoS reference may be used in the same manner.

According to an embodiment, the SMF may deliver an alternative QoS profile corresponding to the alternative QoS parameter set to the NG-RAN through an N2 message via an AMF according to the updated SM policy as in step 6, including the alternative QoS profile in a list in the same order together with the reference. In this case, the alternative QoS profile may also include PDU set QoS parameters corresponding to the alternative PDU set QoS parameter set. According to an embodiment, an alternative PDU set QoS profile corresponding to the alternative PDU set QoS parameter set may be delivered together with the alternative QoS profile corresponding to the alternative QoS parameter set, including them in a list in the same order together with the reference.

The NG-RAN having received the values may notify the SMF through an AMF using an N2 message as in step 7, and modify an N4 session together with a UPF as in step 8.

The NG-RAN may switch to an alternative QoS profile when a QoS profile is not satisfied as in step 9.

According to an embodiment, when a PDU set QoS parameter is included in the alternative QoS profile, an NG-RAN supporting PDU set handling may apply PDB as PSDB and PER as PSER among items of the alternative QoS profile. According to an embodiment, an NG-RAN not supporting PDU set handling ignores PDU set QoS parameters included in the alternative QoS profile.

According to an embodiment, when having the alternative QoS profile and an alternative PDU set QoS profile, an NG-RAN supporting PDU set handling may apply PDB and PER among items of the alternative QoS profile as PSDB and PSER of the alternative PDU set QoS profile. According to an embodiment, an NG-RAN not supporting PDU set handling ignores the alternative PDU set QoS profile.

For example, when a QoS profile is not satisfied for a predetermined QoS flow, the NG-RAN determines whether an alternative QoS profile may be satisfied in order of higher preference priority among alternative QoS profiles, selects an alternative QoS profile matching the NG-RAN, and may notify an application server (AF or AS) that the QoS profile has been changed to a selected alternative QoS profile.

According to an embodiment, in the case of an NG-RAN supporting PDU set handling, when selecting an alternative QoS profile as described above, the alternative QoS profile may be selected by changing and applying a PER value or a PDB value of a PDU set QoS parameter included in the alternative QoS profile or a PDU set QoS parameter of an alternative PDU set QoS profile to a PSER or PSDB value.

In step 210, the NG-RAN delivers a reference given for a selected alternative QoS profile or alternative QoS profile/alternative PDU set QoS profile to the SMF to notify a changed QoS profile or PDU set QoS profile and, when the SMF again notifies the PCF of the reference value, the PCF notifies the AF through step 12 and step 13 that the alternative QoS profile or alternative PDU set QoS profile corresponding to the reference value has been changed to the QoS profile or PDU set QoS profile. The AF having received the notification may modify a data rate or an encoding method according to the changed value.

Instead of the method of notifying that the modification has been made to the QoS profile or PDU set QoS profile through a control plane as in the process of steps 10 to 13, the NG-RAN may transmit a reference given for the selected alternative QoS profile or alternative QoS profile/alternative PDU set QoS profile to a UPF by including the reference in a GTP-U header of an UL link as in step 14. The UPF may deliver a reference given for the changed alternative QoS profile or alternative QoS profile/alternative PDU set QoS profile to an application server (AF or AS) as in step 15 so that the application server may modify a data rate or an encoding method according to the changed value.

In step 15, address information of an application server to which the UPF transmits a notification through an Nupf_EventExposure message to the application server is delivered from the AF to the PCF through the NEF in steps 1 and 2, and delivered to the SMF through an SM policy as in step 5, so that the address information of the application server for the UPF to transmit the notification may be delivered through step 8.

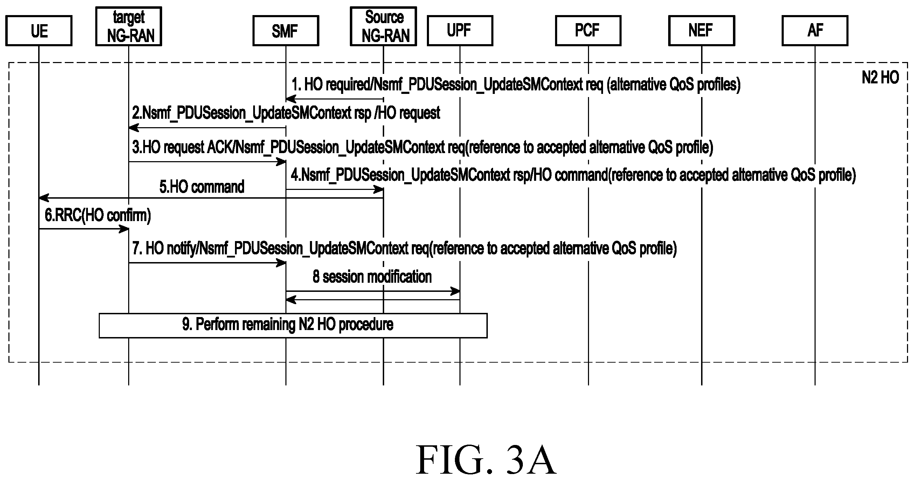

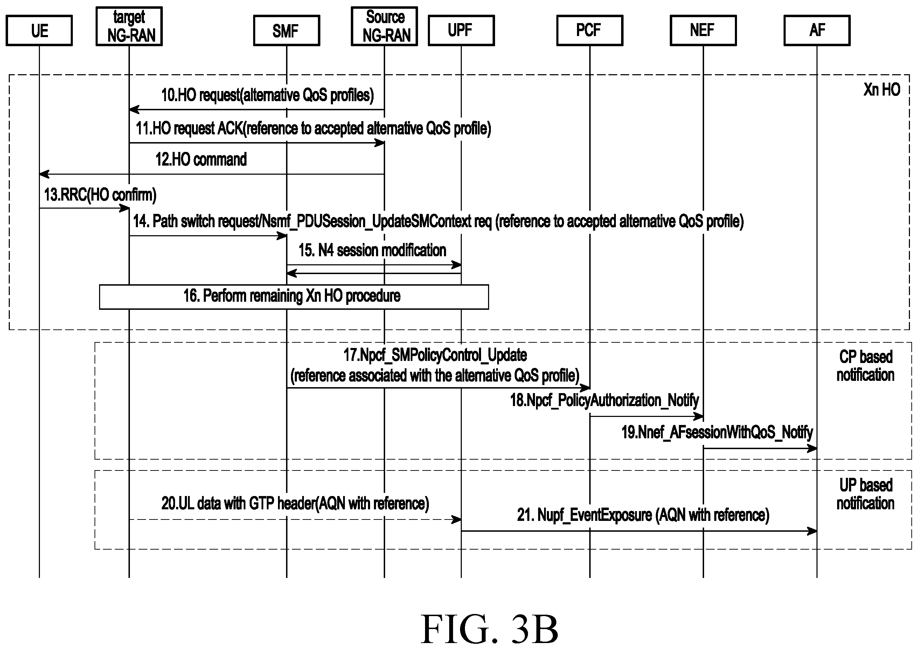

FIGS. 3A and 3B are views illustrating a method in which a handover procedure is performed based on alternative QoS profiles according to an embodiment of the disclosure.

Referring to FIGS. 3A and 3B, a UE may perform a handover (HO) from a source NG-RAN to a target NG-RAN, steps 1 to 9 are for an N2 HO, steps 10 to 16 are for an Xn HO, and steps 17 to 21 are for a method of notifying an application server (AF or AS) of a changed QoS profile or PDU set QoS profile in the target NG-RAN after or subsequent to the HO.

The disclosure proposes a method of applying an alternative QoS profile or an alternative PDU set QoS profile according to whether a source NG-RAN and a target NG-RAN support a PDU set QoS parameter during a handover, when the alternative QoS profile includes the PDU set QoS parameter or the alternative PDU set QoS profile includes the PDU set QoS parameter during the handover.

As a first case, a case where the source NG-RAN supports the PDU set QoS parameter and the target NG-RAN supports the PDU set QoS parameter is described.

In the case of an N2 HO, in step 1, the source NG-RAN may start a handover procedure by transmitting an HO required message through an AMF. The AMF transmits an Nsmf_PDUSession_UpdateSMContext request to the SMF, and alternative QoS profiles including PDU set QoS parameters or alternative QoS profiles and alternative PDU set QoS profiles for QoS flows to be handed over may be delivered to the SMF together with reference information through the HO required message and the Nsmf_PDUSession_UpdateSMContext request message. The SMF sends an Nsmf_PDUSession_UpdateSMContext response to the AMF as in step 2 and, when the AMF sends an HO request to the target NG-RAN, the AMF may transmit reference information for alternative QoS profiles including PDU set QoS parameters or alternative QoS profiles and alternative PDU set QoS profiles for QoS flows to be handed over. The target NG-RAN may accept the handover for a QoS flow that may accept a QoS profile among the QoS flows, or may also accept the handover for the corresponding QoS flow when matching to satisfy an alternative QoS profile or an alternative PDU set QoS profile even when the QoS profile is not satisfied. The accepted QoS flow and a reference corresponding to the alternative QoS profile or the alternative PDU set QoS profile may be delivered to the source NG-RAN through step 3 and/or step 4.

When receiving an RRC message regarding HO confirm from the UE in step 6 and recognizing that the UE is handed over to the target NG-RAN, a reference corresponding to the changed alternative QoS profile or alternative PDU set QoS profile may be delivered by the target NG-RAN to the SMF through the AMF in step 7 for a QoS flow handed over by changing to the alternative QoS profile or the alternative PDU set QoS profile through an HO notify message and an Nsmf_PDUSession_UpdateSMContext request message. Thereafter, a remaining N2 HO process may be performed as in steps 8 and 9.

Meanwhile, in the case of an Xn HO, in step 10, the source NG-RAN may start a handover procedure by transmitting an HO request message to the target NG-RAN. When transmitting the HO request message to the target NG-RAN, reference information for alternative QoS profiles including PDU set QoS parameters or alternative QoS profiles and alternative PDU set QoS profiles for QoS flows to be handed over may be delivered. The target NG-RAN may accept the handover for a QoS flow that may accept a QoS profile among the QoS flows, or may also accept the handover for the corresponding QoS flow when matching to satisfy an alternative QoS profile or an alternative PDU set QoS profile even when the QoS profile is not satisfied. In step 11, the target NG-RAN may deliver the accepted QoS flow and a reference corresponding to the alternative QoS profile or the alternative PDU set QoS profile to the source NG-RAN. In step 12, the source NG-RAN may transmit an HO command message to the UE.

In step 13, the target NG-RAN may receive an RRC message regarding HO confirm from the UE and recognize that the UE is handed over. In step 14, a reference corresponding to the changed alternative QoS profile or alternative PDU set QoS profile may be delivered by the target NG-RAN to the SMF through the AMF for a QoS flow handed over by changing to the alternative QoS profile or the alternative PDU set QoS profile through a path switch request message and an Nsmf_PDUSession_UpdateSMContext request message. Thereafter, a remaining N2 HO process in steps 15 and 16 may be performed.

In step 17, the SMF may deliver a reference given for the changed alternative QoS profile or alternative QoS profile/alternative PDU set QoS profile for each of steps 7 and 14 to the PCF. Upon knowing the reference value, the PCF may notify the AF through steps 18 and 19 that the alternative QoS profile or alternative PDU set QoS profile corresponding to the reference value has been changed to the QoS profile or PDU set QoS profile. The AF having received the notification may modify a data rate or an encoding method according to the changed value.

Instead of the method of notifying that the modification has been made to the QoS profile or PDU set QoS profile through a control plane as in the process of steps 17 to 19, in step 20, the NG-RAN may transmit a reference given for a selected alternative QoS profile or alternative QoS profile/alternative PDU set QoS profile to a UPF by including the reference in a GTP-U header of an UL link. The UPF may deliver a reference given for the changed alternative QoS profile or alternative QoS profile/alternative PDU set QoS profile to an application server (AF or AS) as in step 21 so that the application server may modify a data rate or an encoding method according to the changed value.

In step 21, address information of an application server to which the UPF sends a notification through an Nupf_EventExposure message to the application server is delivered from the AF to the PCF through the NEF as in steps 1, 2, 5, and 8 of FIG. 2, and delivered to the SMF through an SM policy so that the address information of the application server for the UPF to send the notification is delivered.

As a second case, a case where the source NG-RAN supports the PDU set QoS parameter and the target NG-RAN does not support the PDU set QoS parameter is described.

First, in the case of an N2 HO, in step 1, the source NG-RAN may start a handover procedure by transmitting an HO required message through an AMF. The AMF may transmit an Nsmf_PDUSession_UpdateSMContext request message to the SMF. Alternative QoS profiles including PDU set QoS parameters or alternative QoS profiles and alternative PDU set QoS profiles for QoS flows to be handed over may be delivered to the SMF together with reference information through the HO required message and the Nsmf_PDUSession_UpdateSMContext request message. The SMF transmits an Nsmf_PDUSession_UpdateSMContext response to the AMF as in step 2 and, when the AMF transmits an HO request to the target NG-RAN, the AMF may deliver reference information for alternative QoS profiles including PDU set QoS parameters or alternative QoS profiles and alternative PDU set QoS profiles for QoS flows to be handed over.

The target NG-RAN may accept the handover for a QoS flow that may accept a QoS profile among the QoS flows, or may also accept the handover for the corresponding QoS flow when matching to satisfy an alternative QoS profile even when the QoS profile is not satisfied. In the process, the target NG-RAN ignores a PDU set QoS parameter included in the alternative QoS profile or a PDU set QoS parameter included in the alternative PDU set QoS profile. The accepted QoS flow and a reference corresponding to the alternative QoS profile may be delivered to the source NG-RAN through step 3 and/or step 4.

In step 6, the target NG-RAN receives an RRC message regarding HO confirm from the UE and may recognize that the UE is handed over. In step 7, a reference corresponding to the changed alternative QoS profile may be delivered by the target NG-RAN to the SMF through the AMF for a QoS flow handed over by changing to the alternative QoS profile through an HO notify message and an Nsmf_PDUSession_UpdateSMContext request message. Thereafter, a remaining N2 HO process may be performed as in steps 8 and 9.

Meanwhile, in the case of an Xn HO, in step 1, the source NG-RAN may start a handover procedure by transmitting an HO request message to the target NG-RAN. When transmitting the HO request message to the target NG-RAN, reference information for alternative QoS profiles including PDU set QoS parameters or alternative QoS profiles and alternative PDU set QoS profiles for QoS flows to be handed over may be delivered. The target NG-RAN may accept the handover for a QoS flow that may accept a QoS profile among the QoS flows, or may also accept the handover for the corresponding QoS flow when matching to satisfy an alternative QoS profile except for the PDU set QoS parameter even when the QoS profile is not satisfied. The accepted QoS flow and a reference corresponding to the alternative QoS profile may be delivered to the source NG-RAN through step 11.

In step 13, when the target NG-RAN receives an RRC message regarding HO confirm from the UE, the target NG-RAN may recognize that the UE is handed over. In step 14, a reference corresponding to the changed alternative QoS profile may be delivered by the target NG-RAN to the SMF through the AMF for a QoS flow handed over by changing to the alternative QoS profile through a path switch request message and an Nsmf_PDUSession_UpdateSMContext request message. Thereafter, a remaining Xn HO process may be performed as in steps 15 and 16.

In step 17, the SMF may notify the PCF of a reference given for the changed alternative QoS profile for each of steps 7 and 14. The PCF may notify the AF through steps 18 and 19 that the alternative QoS profile corresponding to the reference value has been changed to the QoS profile. The AF having received the notification may modify a data rate or an encoding method according to the changed value.

Instead of the method of notifying that the modification has been made to the QoS profile or PDU set QoS profile through a control plane as in the process of steps 17 to 19, in step 20, the NG-RAN may transmit a reference given for a selected alternative QoS profile to a UPF by including the reference in a GTP-U header of an UL link. The UPF may deliver a reference given for the changed alternative QoS profile or alternative QoS profile/alternative PDU set QoS profile to an application server (AF or AS) as in step 21 so that the application server may modify a data rate or an encoding method according to the changed value.

In step 21, address information of an application server to which the UPF sends a notification through an Nupf_EventExposure message to the application server is delivered from the AF to the PCF through the NEF as in steps 1, 2, 5, and 8 of FIG. 2, and delivered to the SMF through an SM policy so that the address information of the application server for the UPF to send the notification may be delivered.

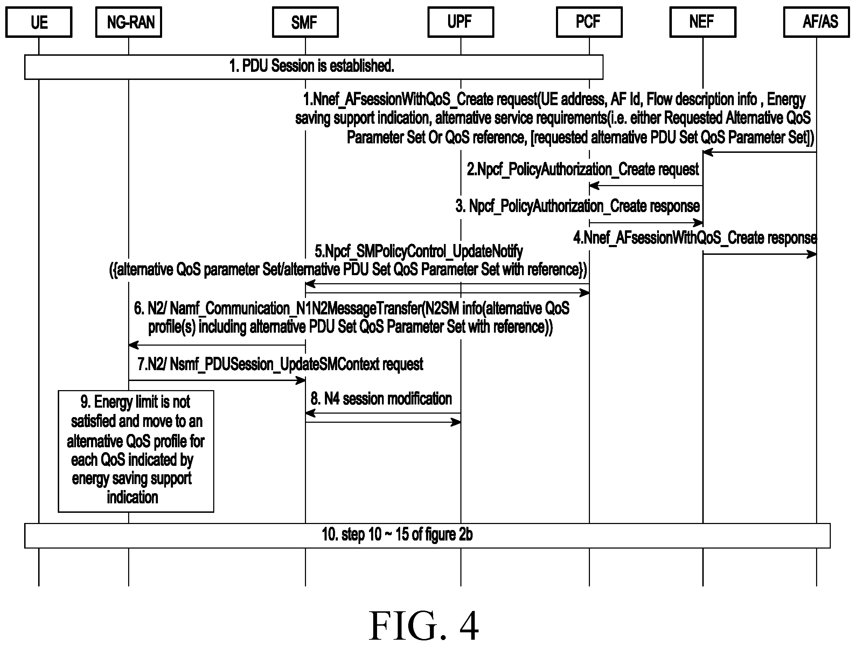

FIG. 4 is a view illustrating a method for reducing energy consumption by switching based on alternative QoS profiles according to an energy usage requirement of a base station according to an embodiment of the disclosure.

Referring to FIG. 4, in a circumstance in which a PDU session in step 0 is created for a UE, service requirements and alternative service requirements for the corresponding service flow of the UE may be delivered from an AF to a PCF through an NEF using an Nnef_AFsessionWithQoS_Create request message from an application server AF, as in step 1 and/or step 2. The request message may include a UE address for identifying a UE, an AF identifier for identifying an AF, and a flow description or an external application identifier for identifying a service flow.

The service requirement may include a requested QoS reference or requested QoS parameters. According to an embodiment, when providing QoS based on a PDU set, PDU set QoS parameters may be included in the service requirement. The PDU set QoS parameters may include some or all of a PDU set delay budget (PSDB), a PDU set error rate (PSER), or PDU set integrate handling information (PSIHI).

The QoS parameters may include some or all of a priority, a maximum burst size, a packet delay budget (PDB), a maximum bit rate, a guaranteed bit rate, or a packet error rate (PER).

According to an embodiment, the AF may deliver alternative service requirements as service requirements that may be substituted to relatively reduce energy consumption instead of existing service requirements together with the service requirements through step 1, when an allowed energy consumption limit is exceeded or is about to be exceeded in a 5G network, e.g., an NG-RAN. According to an embodiment, an energy saving support indication may be included and delivered through step 1 to indicate that the service data flow is capable of applying an alternative service requirement instead of a service requirement to reduce energy consumption.

The service requirement is configured as one of a requested QoS reference or a requested QoS parameter set, but when providing QoS for a PDU set, the service requirement may be configured by including PDU set QoS parameter sets together with one of the two.

The alternative service requirement is configured as one of a requested alternative QoS reference or a requested alternative QoS parameter set, but when providing QoS for a PDU set, the alternative service requirement may be configured by including alternative PDU set QoS parameter sets together with one of the two, and the AF may deliver a plurality of alternative service requirements in order of preference or priority in step 1.

The alternative QoS parameter sets may be configured with the QoS parameters, and the alternative PDU set QoS parameter sets may be configured with the PDU set QoS parameters.

The PCF may authenticate the requirements received through step 1 and/or step 2 and transmit a response to the request through step 3 and/or step 4.

In step 5, the PCF may transmit an updated SM policy for the corresponding PDU session of the corresponding UE to the corresponding SMF. For example, the PCF transmits an Npcf_SMPolicyControl_UpdateNotify message to the SMF, and the message includes a QoS profile and may also include lists including at least one of an alternative QoS parameter set or an alternative PDU set QoS parameter set. According to an embodiment, by including a reference for each configuration of the alternative QoS parameter set or the alternative PDU set QoS parameter set in the list, it is possible to know which alternative QoS parameter set or alternative PDU set QoS parameter set corresponds by referring to the reference.

Although the description mainly describes the alternative QoS parameter set for convenience of description, the alternative QoS reference may be used in the same manner.

According to an embodiment, the SMF may deliver an alternative QoS profile corresponding to the alternative QoS parameter set to the NG-RAN through an N2 message via an AMF according to the updated SM policy as in step 6, including the alternative QoS profile in a list in the same order together with the reference. In this case, the alternative QoS profile may also include PDU set QoS parameters corresponding to the alternative PDU set QoS parameter set. According to an embodiment, an alternative PDU set QoS profile corresponding to the alternative PDU set QoS parameter set may be delivered together with the alternative QoS profile corresponding to the alternative QoS parameter set, including them in a list in the same order together with the reference.

Meanwhile, the NG-RAN having received the values may notify the SMF through an AMF using an N2 message as in step 7, and modify an N4 session together with a UPF as in step 8.

According to an embodiment, when energy consumption of the NG-RAN provided through O&M or the like exceeds or approaches a limit as in step 9, the NG-RAN may change an alternative QoS profile value to a QoS profile value instead of an existing QoS profile value, when a QoS profile corresponding to a QoS flow for UEs serviced through the NG-RAN includes an energy saving support indication or the energy saving support indication is allocated to the corresponding QoS flow.

According to an embodiment, when the energy saving support indication is applied per corresponding PDU session, an alternative QoS profile value may be changed to a QoS profile value instead of an existing QoS profile value for QoS flows corresponding to the corresponding PDU session.

According to an embodiment, when a PDU set QoS parameter is included in the alternative QoS profile, an NG-RAN supporting PDU set handling applies PDB as PSDB and PER as PSER among items of the alternative QoS profile. According to an embodiment, an NG-RAN not supporting PDU set handling ignores PDU set QoS parameters included in the alternative QoS profile.

According to an embodiment, when having the alternative QoS profile and an alternative PDU set QoS profile, an NG-RAN supporting PDU set handling applies PDB and PER among items of the alternative QoS profile as PSDB and PSER of the alternative PDU set QoS profile. According to an embodiment, an NG-RAN not supporting PDU set handling ignores the alternative PDU set QoS profile.

According to an embodiment, when applying energy saving to a predetermined QoS flow, the NG-RAN determines whether an alternative QoS profile may be satisfied in order of higher preference priority among alternative QoS profiles, selects an alternative QoS profile matching the NG-RAN, and notifies an application server (AF or AS) that the QoS profile has been changed to the selected alternative QoS profile.

According to an embodiment, in the case of an NG-RAN supporting PDU set handling, when selecting an alternative QoS profile as described above, the alternative QoS profile is selected by changing and applying a PER value or a PDB value of a PDU set QoS parameter included in the alternative QoS profile or a PDU set QoS parameter of an alternative PDU set QoS profile to a PSER or PSDB value.

According to an embodiment, in step 10, the NG-RAN delivers a reference given for a selected alternative QoS profile or alternative QoS profile/alternative PDU set QoS profile to the SMF to notify a changed QoS profile or PDU set QoS profile and, when the SMF again notifies the PCF of the reference value, the PCF notifies the AF through steps 12 and 13 that the alternative QoS profile or alternative PDU set QoS profile corresponding to the reference value has been changed to the QoS profile or PDU set QoS profile. The AF having received the notification may modify a data rate or an encoding method according to the changed value.

Instead of the method of notifying that the modification has been made to the QoS profile or PDU set QoS profile through a control plane as in the process of steps 10 to 13, in step 14, the NG-RAN transmits a reference given for the selected alternative QoS profile or alternative QoS profile/alternative PDU set QoS profile to a UPF by including the reference in a GTP-U header of an UL link, and the UPF may deliver a reference given for the changed alternative QoS profile or alternative QoS profile/alternative PDU set QoS profile to an application server (AF or AS) as in step 15 so that the application server may modify a data rate or an encoding method according to the changed value.

In step 15, address information of an application server to which the UPF sends a notification through an Nupf_EventExposure message to the application server is delivered from the AF to the PCF through the NEF in steps 1 and 2, and delivered to the SMF through an SM policy as in step 5, so that the address information of the application server for the UPF to send the notification is delivered through step 8.

According to an embodiment, when an energy saving support indication is included in MM subscription information of a UDM of a UE, when the NG-RAN reaches energy consumption limit as in step 9, the QoS profile may be changed to an alternative QoS profile for a QoS flow set up for the UE to reduce energy consumption.

According to an embodiment, when an energy saving support indication is included for a predetermined S-NSSAI or DNN in SM subscription information of a UDM of a UE, the information is delivered to the NG-RAN as an SM context for a PDU session and, when the NG-RAN reaches energy consumption limit as in step 9, the QoS profile may be changed to an alternative QoS profile for QoS flows set up for the corresponding PDU session to reduce energy consumption.

According to an embodiment, when an energy saving support indication is included for a predetermined S-NSSAI or DNN in a PCF, it may be recognized that energy saving may be applied to an entire corresponding PDU session or some QoS flows. The information is delivered as an SM context for a PDU session or QoS flow to the NG-RAN as an energy saving support indication and, when the NG-RAN is at energy consumption limit as in step 9, the QoS profile may be changed to an alternative QoS profile for all QoS flows set up for the corresponding PDU session or for QoS flows to which the energy saving support indication corresponds to reduce energy consumption.

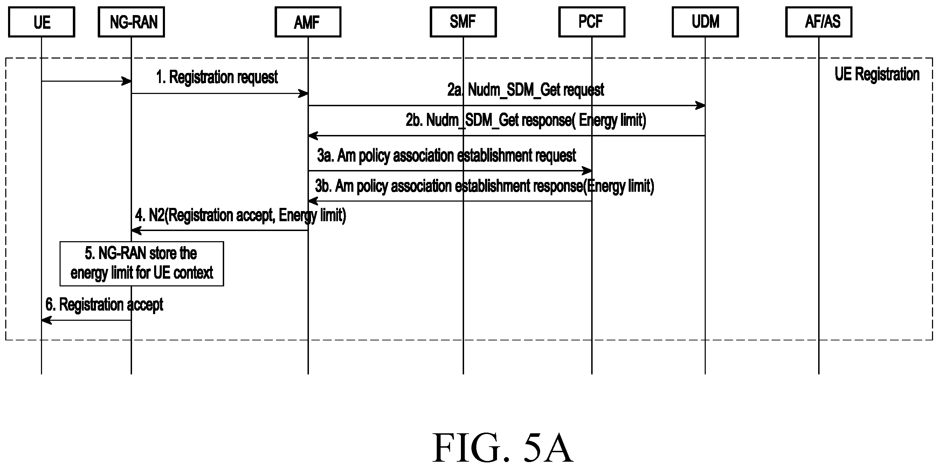

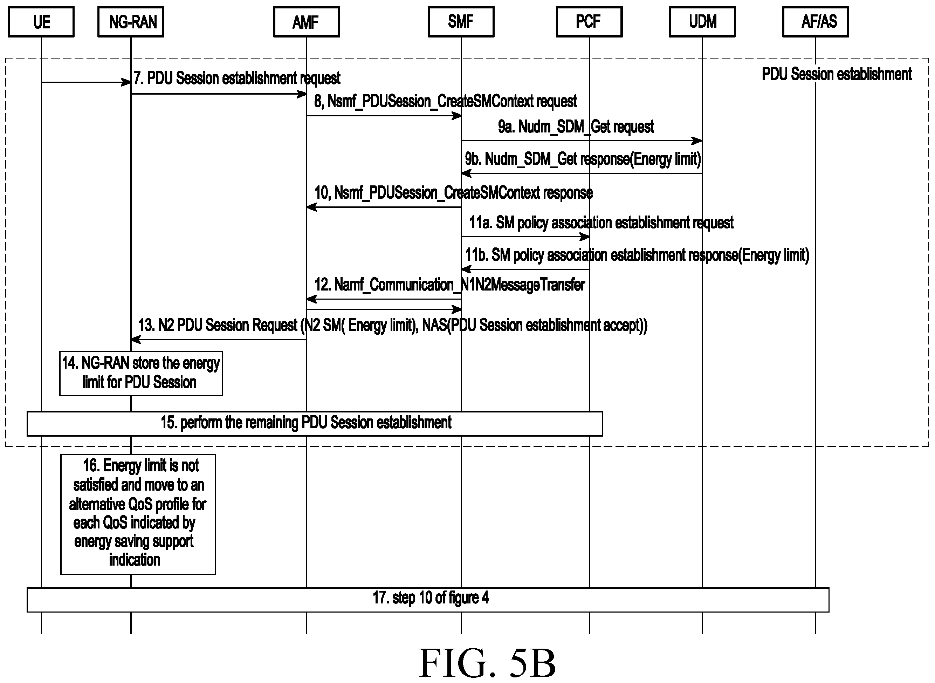

FIGS. 5A and 5B are views illustrating a method for reducing energy consumption by switching based on alternative QoS profiles according to an energy usage requirement of a base station according to an embodiment of the disclosure.

Referring to FIGS. 5A and 5B, a condition for the NG-RAN to determine whether to perform energy saving for a UE, a PDU session of the UE, or a QoS flow of the UE, or a condition for an energy consumption limit may be set according to subscription information per UE, may be set per UE as an AM policy, or may be set for the corresponding PDU session or QoS flow as an SM policy.

A method for setting a condition for energy saving per UE is as follows.

When a UE registers with a 5G network by transmitting a registration request message as in step 1, the AMF may access the UDM and obtain subscription information as in steps 2a and 2b. In this case, as in step 2b, the subscription information may include information on an energy limit, e.g., an amount of energy consumption or a limit of an amount of energy consumption for the NG-RAN to determine whether to perform energy saving for the corresponding UE. The amount of energy consumption of the NG-RAN may be represented as an amount of energy for servicing the corresponding UE per unit time or a total amount of energy allowed for servicing the corresponding UE for a predetermined period.

As another embodiment, the AMF may access the PCF and obtain policy information for a UE as in steps 3a and 3b. In this case, as in step 3b, the policy information may include information on an energy limit, e.g., an amount of energy consumption or a limit of an amount of energy consumption for the NG-RAN to determine whether to perform energy saving for the corresponding UE. The amount of energy consumption of the NG-RAN may be represented as an amount of energy for servicing the corresponding UE per unit time, a total amount of energy allowed for servicing the corresponding UE for a predetermined period, or the like.

The AMF having received the energy limit through step 2b or step 3b may deliver the energy limit for a UE together when delivering a registration accept message to the NG-RAN through an N2 message for the UE as in step 4. The NG-RAN may store the received energy limit value in a UE context as in step 5, and continuously monitor energy consumption required to service a UE accordingly.

Meanwhile, a method for setting a condition for energy saving per PDU session or QoS flow is as follows.

When a UE requests a PDU session by transmitting a PDU session establishment request message as in step 7, the SMF may access the UDM and obtain SM subscription information as in steps 9a and 9b. As in step 9b, the SM subscription information may include information on an energy limit, e.g., an amount of energy consumption or a limit of an amount of energy consumption for the NG-RAN to determine whether to perform energy saving for the corresponding PDU session. The amount of energy consumption of the NG-RAN may be represented as an amount of energy for servicing the corresponding PDU session per unit time, a total amount of energy allowed for servicing the corresponding PDU session for a predetermined period, or the like.

As another embodiment, the SMF may access the PCF and obtain SM policy information for a PDU session as in steps 11a and 11b. In this case, as in step 11b, the SM policy information may include information on an energy limit, e.g., an amount of energy consumption or a limit of an amount of energy consumption for the NG-RAN to determine whether to perform energy saving for the corresponding PDU session. The amount of energy consumption of the NG-RAN may be represented as an amount of energy for servicing the corresponding PDU session per unit time, or a total amount of energy allowed for servicing the corresponding PDU session for a predetermined period. Alternatively, the energy limit may be allocated only for specific traffic or a specific service data flow, not for an entire PDU session, and in this case, information for identifying the specific traffic or specific service data flow is allocated together with the energy limit, and the energy limit value is allocated to a QoS flow corresponding thereto.

The SMF having received the energy limit through step 9b or step 11b may deliver the energy limit for the PDU session or QoS flow together when transmitting a PDU session establishment accept message to the UE or separately delivering an N2 SM message to the NG-RAN as in steps 12 and 13. The NG-RAN may store the received energy limit value in a UE context or a context for a PDU session in a UE SM context as in step 14, and continuously monitor energy consumption required to service the PDU session or QoS flow accordingly.

Meanwhile, when energy consumption of the NG-RAN provided exceeds or approaches a limit as in step 16, the NG-RAN may change an alternative QoS profile value to a QoS profile value instead of an existing QoS profile value, when a QoS profile corresponding to a QoS flow for UEs serviced through the NG-RAN includes an energy saving support indication or the energy saving support indication is allocated to the corresponding QoS flow.

According to an embodiment, when the energy saving support indication is applied per corresponding PDU session, an alternative QoS profile value may be changed to a QoS profile value instead of an existing QoS profile value for QoS flows corresponding to the corresponding PDU session.

According to an embodiment, when a PDU set QoS parameter is included in the alternative QoS profile, an NG-RAN supporting PDU set handling may apply PDB as PSDB and PER as PSER among items of the alternative QoS profile. According to an embodiment, an NG-RAN not supporting PDU set handling ignores PDU set QoS parameters included in the alternative QoS profile.

According to an embodiment, when having the alternative QoS profile and an alternative PDU set QoS profile, an NG-RAN supporting PDU set handling may apply PDB and PER among items of the alternative QoS profile as PSDB and PSER of the alternative PDU set QoS profile. According to an embodiment, an NG-RAN not supporting PDU set handling ignores the alternative PDU set QoS profile.

According to an embodiment, when applying energy saving to a predetermined QoS flow, the NG-RAN determines whether an alternative QoS profile may be satisfied in order of higher preference priority among alternative QoS profiles, selects an alternative QoS profile matching the NG-RAN, and notifies an application server (AF or AS) that the QoS profile has been changed to the selected alternative QoS profile.

According to an embodiment, in the case of an NG-RAN supporting PDU set handling, when selecting an alternative QoS profile as described above, the alternative QoS profile is selected by changing and applying a PER value or a PDB value of a PDU set QoS parameter included in the alternative QoS profile or a PDU set QoS parameter of an alternative PDU set QoS profile to a PSER or PSDB value.

In step 17, like steps 10 to 15 of FIG. 4, the NG-RAN delivers a reference configured for a selected alternative QoS profile or alternative QoS profile/alternative PDU set QoS profile to the SMF to notify a changed QoS profile or PDU set QoS profile and, when the SMF again notifies the PCF of the reference value, the PCF may notify the AF that the alternative QoS profile or alternative PDU set QoS profile corresponding to the reference value has been changed to the QoS profile or PDU set QoS profile. The AF having received the notification may modify a data rate or an encoding method according to the changed value.

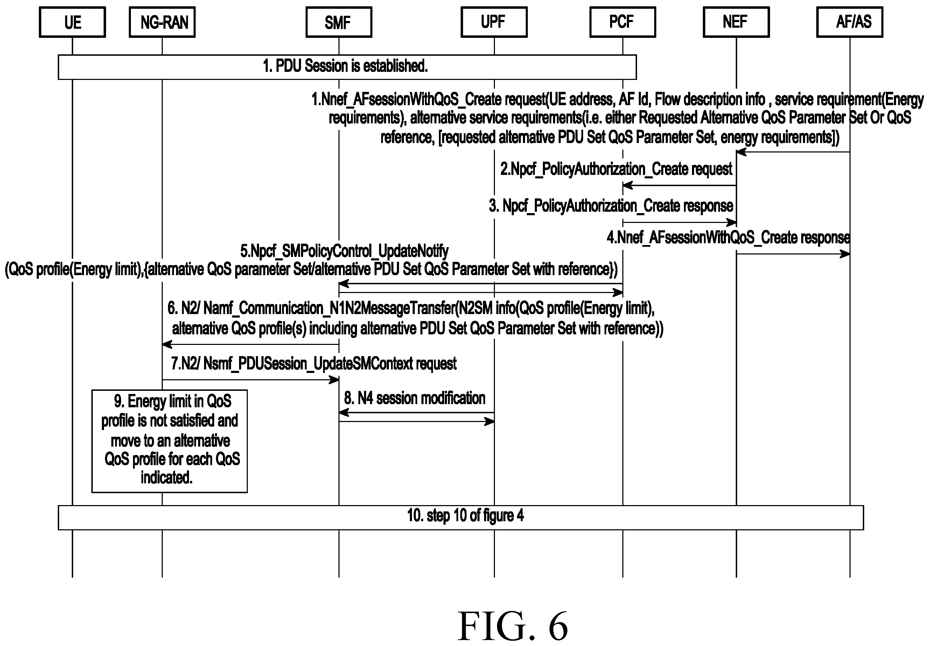

FIG. 6 is a view illustrating a method for reducing energy consumption by switching based on alternative QoS profiles according to an energy usage requirement of a base station according to an embodiment of the disclosure.

Referring to FIG. 6, in a circumstance in which a PDU session in step 1 is created for a UE, service requirements and alternative service requirements for the corresponding service flow of the UE may be delivered from an AF to a PCF through an NEF using an Nnef_AFsessionWithQoS_Create request message from an application server AF, as in step 1 and/or step 2. The request message may include a UE address for identifying a UE, an AF identifier for identifying an AF, and a flow description or an external application identifier for identifying a service flow.

The service requirement may include a requested QoS reference or requested QoS parameters. According to an embodiment, when providing QoS based on a PDU set, PDU set QoS parameters may be included in the service requirement. The PDU set QoS parameters may include some or all of a PDU set delay budget (PSDB), a PDU set error rate (PSER), or PDU set integrate handling information (PSIHI).

According to an embodiment, the QoS parameters may include some or all of a priority, a maximum burst size, a packet delay budget (PDB), a maximum bit rate, a guaranteed bit rate, or a packet error rate (PER).

The AF may deliver alternative service requirements as service requirements that may be substituted to relatively reduce energy consumption instead of existing service requirements together with the service requirements through step 1, when an allowed energy consumption limit is exceeded or is about to be exceeded in a 5G network, e.g., an NG-RAN. According to an embodiment, when the alternative service requirement may be applied instead of the service requirement to reduce energy consumption, an energy requirement that may be used to determine this may be delivered inside the service requirement or as a separate requirement through step 1.

According to an embodiment, the service requirement is configured as one of a requested QoS reference or a requested QoS parameter set as described above in addition to the requested energy requirement, but when providing QoS for a PDU set, the service requirement may be configured by including PDU set QoS parameter sets together with one of the two. The energy requirement may include a maximum energy consumption allowance or a minimum expected energy consumption required for the corresponding service data flow.

According to an embodiment, the alternative service requirement is configured as one of a requested alternative QoS reference or a requested alternative QoS parameter set, but when providing QoS for a PDU set, the alternative service requirement may be configured by including alternative PDU set QoS parameter sets together with one of the two. The AF may deliver a plurality of alternative service requirements in order of preference or priority in step 1.

The alternative QoS parameter sets may be configured with the QoS parameters, and the alternative PDU set QoS parameter sets may be configured with the PDU set QoS parameters. The alternative service requirement may also include a maximum energy consumption allowance or a minimum expected energy consumption required for the corresponding service data flow.

The PCF may authenticate the requirements received through step 1 and/or step 2 and transmit a response to the request through step 3 and/or step 4.

In step 5, the PCF may transmit an updated SM policy for the corresponding PDU session of the corresponding UE to the corresponding SMF. The PCF transmits an Npcf_SMPolicyControl_UpdateNotify message to the SMF, the message includes a QoS profile, and the message may also include lists including at least one of an alternative QoS parameter set or an alternative PDU set QoS parameter set. According to an embodiment, by including a reference for each configuration of the alternative QoS parameter set or the alternative PDU set QoS parameter set in the list, it is possible to know which alternative QoS parameter set or alternative PDU set QoS parameter set corresponds by referring to the reference. The QoS profile may include an energy limit value that may be consumed by the NG-RAN according to the requirement of the energy requirement. The energy limit value may mean a minimum energy consumption that should be provided for the corresponding service flow, or may mean an allowance of a maximum energy consumption that may be provided for the corresponding service flow.

Although the description mainly describes the alternative QoS parameter set for convenience of description, the alternative QoS reference may be used identically or substantially identically.

According to an embodiment, the SMF may deliver an alternative QoS profile corresponding to the alternative QoS parameter set to the NG-RAN through an N2 message via an AMF according to the updated SM policy as in step 6, including the alternative QoS profile in a list in the same order together with the reference. In this case, the alternative QoS profile may also include PDU set QoS parameters corresponding to the alternative PDU set QoS parameter set. According to an embodiment, an alternative PDU set QoS profile corresponding to the alternative PDU set QoS parameter set may be delivered together with the alternative QoS profile corresponding to the alternative QoS parameter set, including them in a list in the same order together with the reference. In step 6, the energy limit value may be included in the QoS profile and delivered to the NG-RAN, and an alternative energy limit value may also be included in the alternative QoS profile and delivered to the NG-RAN.

The NG-RAN having received the values may notify the SMF through an AMF using an N2 message as in step 7, and modify an N4 session together with a UPF as in step 8.

When energy consumption for the corresponding QoS flow in the provided NG-RAN exceeds an energy limit as in step 9, i.e., when a circumstance in which it is difficult to provide a minimum value of energy consumption arises or when a maximum allowance of energy consumption is exceeded or approaches a limit of the maximum allowance, the NG-RAN may change an alternative QoS profile value to a QoS profile value instead of an existing QoS profile value for UEs serviced through the NG-RAN for the corresponding QoS flow.

According to an embodiment, when a PDU set QoS parameter is included in the alternative QoS profile, an NG-RAN supporting PDU set handling may apply PDB as PSDB and PER as PSER among items of the alternative QoS profile. According to an embodiment, an NG-RAN not supporting PDU set handling ignores PDU set QoS parameters included in the alternative QoS profile.

According to an embodiment, when having the alternative QoS profile and an alternative PDU set QoS profile, an NG-RAN supporting PDU set handling may apply PDB and PER among items of the alternative QoS profile as PSDB and PSER of the alternative PDU set QoS profile. According to an embodiment, an NG-RAN not supporting PDU set handling ignores the alternative PDU set QoS profile.

According to an embodiment, when applying energy saving to a predetermined QoS flow, the NG-RAN determines whether an alternative QoS profile may be satisfied in order of higher preference priority among alternative QoS profiles, selects an alternative QoS profile matching the NG-RAN, and may notify an application server (AF or AS) that the QoS profile has been changed to the selected alternative QoS profile.

According to an embodiment, in the case of an NG-RAN supporting PDU set handling, when selecting an alternative QoS profile as described above, the alternative QoS profile may be selected by changing and applying a PER value or a PDB value of a PDU set QoS parameter included in the alternative QoS profile or a PDU set QoS parameter of an alternative PDU set QoS profile to a PSER or PSDB value.

Meanwhile, in step 10, the NG-RAN may deliver a reference configured for a selected alternative QoS profile or alternative QoS profile/alternative PDU set QoS profile to the SMF to notify a changed QoS profile or PDU set QoS profile. When the SMF again notifies the PCF of the reference value, the PCF notifies the AF through steps 12 and 13 that the alternative QoS profile or alternative PDU set QoS profile corresponding to the reference value has been changed to the QoS profile or PDU set QoS profile. The AF having received the notification may modify a data rate or an encoding method according to the changed value.

Instead of the method of notifying that the modification has been made to the QoS profile or PDU set QoS profile through a control plane as in the process of steps 10 to 13, the NG-RAN may transmit a reference given for a selected alternative QoS profile or alternative QoS profile/alternative PDU set QoS profile to a UPF by including the reference in a GTP-U header of an UL link as in step 14. The UPF may deliver a reference configured for the changed alternative QoS profile or alternative QoS profile/alternative PDU set QoS profile to an application server (AF or AS) as in step 15 so that the application server may modify a data rate or an encoding method according to the changed value.

In step 15, address information of an application server to which the UPF sends a notification through an Nupf_EventExposure message to the application server is delivered from the AF to the PCF through the NEF in steps 1 and 2, and delivered to the SMF through an SM policy as in step 5, so that the address information may be delivered as the address information of the application server for the UPF to send the notification through step 8.

According to an embodiment, when an energy limit is included in MM subscription information of a UDM of a UE, when the NG-RAN reaches energy consumption limit as in step 9, the QoS profile may be changed to an alternative QoS profile for a QoS flow of the UE to reduce energy consumption.

According to an embodiment, when an energy limit is included for a predetermined S-NSSAI or DNN in SM subscription information of a UDM of a UE, the information may be delivered to the NG-RAN as an SM context for a PDU session. When the NG-RAN reaches energy consumption limit as in step 9, the QoS profile may be changed to an alternative QoS profile for QoS flows of the corresponding PDU session to reduce energy consumption.

According to an embodiment, when an energy limit is included for a predetermined S-NSSAI or DNN in a PCF, it may be recognized that energy saving may be applied to an entire corresponding PDU session or some QoS flows. The information is delivered as an SM context for a PDU session or QoS flow to the NG-RAN as an energy limit and, when the NG-RAN reaches energy consumption limit as in step 9, the QoS profile may be changed to an alternative QoS profile for QoS flows of the corresponding PDU session to reduce energy consumption.

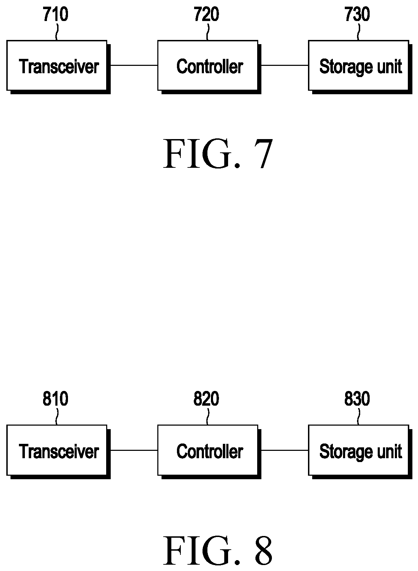

FIG. 7 is a block diagram illustrating a UE according to an embodiment of the disclosure.

In the embodiment of FIG. 7, the UE may be a UE or a UE device illustrated in each of FIGS. 1 to 6B.

Referring to FIG. 7, the UE may include a transceiver 710, a controller 720, and a storage unit 730. In the disclosure, the controller may be defined as a circuit, an application-specific integrated circuit, or at least one processor.

The transceiver 710 may transmit and receive signals to/from a base station or a network entity. The transceiver 710 may transmit/receive data to/from the base station or the network entity using, e.g., wireless communication.

The controller 720 may control the overall operation of the UE according to an embodiment. For example, the controller 720 may control a signal flow between blocks to perform the operation described with reference to FIGS. 1 to 6B.

The storage unit 730 may store at least one of information transmitted and received through the transceiver 710 and information generated through the controller 720. For example, the storage unit 730 may store, e.g., information and data necessary for the method described with reference to FIGS. 1 to 6B.

FIG. 8 is a block diagram illustrating a network entity according to an embodiment of the disclosure.

In the embodiment of FIG. 8, the network entity may be implemented as one of a base station (NG-RAN), an SMF, a UPF, a PCF, an NEF, and an AF/AS illustrated in each of FIGS. 1 to 6B.

Referring to FIG. 8, the network entity may include a transceiver 810, a controller 820, and a storage unit 830. In the disclosure, a controller may be defined as a circuit or an application specific integrated circuit or at least one processor.

The transceiver 810 may transmit and receive signals to/from the UE, the base station, or another network entity. The transceiver 810 may transmit/receive data to/from the UE, base station or the other network entity using, e.g., wireless communication.

The controller 820 may control the overall operation of the network entity according to an embodiment. For example, the controller 820 may control a signal flow between blocks to perform the operation described with reference to FIGS. 1 to 6B.

The storage unit 830 may store at least one of information transmitted and received through the transceiver 810 and information generated through the controller 820. For example, the storage unit 830 may store, e.g., information and data necessary for the method described with reference to FIGS. 1 to 6B.

## Claims

1. A method of operating a session management function (SMF) in a wireless communication system, the method comprising:
receiving, from a policy control function (PCF), a first message indicating an updated session management (SM) policy for a packet data unit (PDU) session; and
transmitting, to a base station, a second message including an alternative quality of service (QoS) profile determined based on the first message, wherein the first message includes at least one of an alternative QoS parameter set or an alternative PDU set QoS parameter set.

2. The method of claim 1, wherein the alternative QoS parameter set includes at least one of a priority for QoS profiles, a maximum burst size, a packet delay budget (PDB), a maximum bit rate, a guaranteed bit rate (GBR), or a packet error rate (PER).

3. The method of claim 1, wherein the alternative PDU set QoS parameter set includes at least one of a PDU set delay budget (PSDB), a PDU set error rate (PSER), or PDU set integrate handling information (PSIHI).

4. The method of claim 1, wherein at least one traffic for a network slice is processed through the PDU session, and wherein the network slice is a set of network functions (NFs) for supporting services having different characteristics.

5. A method of operating a base station in a wireless communication system, the method comprising:
receiving, from a session management function (SMF), a first message including an alternative quality of service (QoS) profile related to an alternative QoS parameter set or an alternative packet data unit (PDU) set QoS parameter set; and
changing a configured QoS profile to the alternative QoS profile, when the configured QoS profile needs to be changed.

6. The method of claim 5, further comprising:
determining, based on the configured QoS profile not being satisfied for a QoS flow, whether an alternative QoS profile may be satisfied for the QoS flow in an order of higher priority among alternative QoS profiles; and
selecting an alternative QoS profile matching the base station, and transmitting information on a selected alternative QoS profile to an application server.

7. The method of claim 6, wherein the alternative QoS parameter set includes at least one of a priority for QoS profiles, a maximum burst size, a packet delay budget (PDB), a maximum bit rate, a guaranteed bit rate (GBR), or a packet error rate (PER).

8. The method of claim 6, wherein the alternative PDU set QoS parameter set includes at least one of a PDU set delay budget (PSDB), a PDU set error rate (PSER), or PDU set integrate handling information (PSIHI).

9. A session management function (SMF) in a wireless communication system, the SMF comprising:
a transceiver; and
a controller, wherein the controller is configured to:
receive, from a policy control function (PCF), a first message indicating an updated session management (SM) policy for a packet data unit (PDU) session; and
control to transmit, to a base station, a second message including an alternative quality of service (QoS) profile determined based on the first message, wherein the first message includes at least one of an alternative QoS parameter set or an alternative PDU set QoS parameter set.

10. The SMF of claim 9, wherein the alternative QoS parameter set includes at least one of a priority for QoS profiles, a maximum burst size, a packet delay budget (PDB), a maximum bit rate, a guaranteed bit rate (GBR), or a packet error rate (PER).

11. The SMF of claim 9, wherein the alternative PDU set QoS parameter set includes at least one of a PDU set delay budget (PSDB), a PDU set error rate (PSER), or PDU set integrate handling information (PSIHI).

12. The SMF of claim 9, wherein at least one traffic for a network slice is processed through the PDU session, and wherein the network slice is a set of network functions (NFs) for supporting services having different characteristics.

13. A base station in a wireless communication system, the base station comprising:
a transceiver; and
a controller, wherein the controller is configured to:
receive, from a session management function (SMF), a first message including an alternative quality of service (QoS) profile related to an alternative QoS parameter set or an alternative packet data unit (PDU) set QoS parameter set; and
change a configured QoS profile to the alternative QoS profile, when the configured QoS profile needs to be changed.

14. The base station of claim 14, wherein the controller is configured to:
determine, based on the configured QoS profile not being satisfied for a QoS flow, whether an alternative QoS profile may be satisfied for the QoS flow in an order of higher priority among alternative QoS profiles; and
control to select an alternative QoS profile matching the base station, and transmit information on a selected alternative QoS profile to an application server.

15. The base station of claim 14, wherein the alternative QoS parameter set includes at least one of a priority for QoS profiles, a maximum burst size, a packet delay budget (PDB), a maximum bit rate, a guaranteed bit rate (GBR), or a packet error rate (PER).
